# EUROPEAN PATENT APPLICATION

(11) **EP 4 496 101 A1**
(43) Date of publication of application: **22.01.2025**
(21) Application number: 24188987.2
(22) Date of filing: 16.07.2024
(51) Int. Cl.: H01M 50/383

(54) **SECONDARY BATTERY ASSEMBLY**

(30) Priority: 17.07.2023 KR 20230092246
(71) Applicant: SK On Co., Ltd., Seoul 03161 (KR)
(72) Inventor: KIM, Moon Sung, 34124 Daejeon (KR); JEON, Hae Ryong, 34124 Daejeon (KR)
(74) Representative: Stolmár & Partner Patentanwälte PartG mbB

(57) **Abstract**

Embodiments of the present disclosure relate to a secondary battery assembly including a plurality of battery cells, a case forming an accommodating space for accommodating the plurality of battery cells, and a non-combustible gas accommodated in the accommodating space together with the plurality of battery cells to mitigate or delay the thermal propagation.

## Description

### BACKGROUND

### 1. Field

Embodiments of the present disclosure relate to a secondary battery assembly. Specifically, they relate to a structure of a secondary battery assembly capable of delaying thermal propagation (TP).

### 2. Description of the Related Art

The operating principle of lithium secondary batteries is an electrochemical oxidation-reduction reaction. More specifically, the operating principle of lithium secondary batteries is that electricity is generated through the movement of lithium ions between the anode and the cathode during charging and discharging cycles. During the charging, a voltage is applied that causes the lithium ions to move from the cathode to the anode. During the discharging cycle the lithium ions move back from the anode to the cathode while electrons flow from the anode to the cathode through the external circuit thus providing a current to a load connected to the external circuit. In the case of a lithium secondary battery, during the discharging cycle lithium ions in the anode escape therefrom (a process known as de-intercalation) and move to the cathode through the electrolyte and the separator

Recently, due to fire or explosion accidents occurring during the use of lithium secondary batteries, social concerns about the safety of battery use are increasing. Based on these social concerns, one recent major developmental task for lithium secondary batteries is to eliminate instabilities such as fire and explosion caused by thermal runaway of secondary battery cells.

### SUMMARY

According to embodiments of the present disclosure, air is advantageously discharged air from the inside of a secondary battery assembly or the inside of a secondary battery assembly easily filled with a non-combustible gas.

According to embodiments of the present disclosure, a problem that the embodiments advantageously solve is minimizing or preventing fire and explosion of a secondary battery assembly.

According to still another embodiment of the present disclosure, the lifespan and stability of a secondary battery assembly is substantially improved.

Moreover, the secondary battery assembly of the present disclosure can be widely applied in the field of electric vehicles, battery charging stations, energy storage system (ESS), and green technology, such as photovoltaics, and wind power generation using batteries. In addition, the secondary battery assembly of the present disclosure can be used in eco-friendly electric vehicles mobility to prevent climate change by suppressing air pollution and greenhouse gas emissions, including electric vehicles and hybrid vehicles.

A secondary battery assembly according to an embodiment of the present disclosure may include a plurality of battery cells; a case forming an accommodating space for accommodating the plurality of battery cells; and a non-combustible gas filled into the accommodating space.

In addition, the secondary battery assembly may further include a first hole and a second hole penetrating the case and communicating with the accommodating space; and a first closing member and a second closing member coupled to the case to close the first hole and the second hole.

In addition, when a non-combustible gas is injected into the accommodating space through the first hole, at least a part of the gas in the accommodating space may be discharged through the second hole.

The first closing member and the second closing member may each include a hole sealing portion for sealing the first hole and the second hole.

The first hole and the second hole may be formed on one surface of the case.

The distance from the first hole to the second hole may be longer than the length from one edge of the one surface of the case.

The first hole and the second hole may be positioned diagonally on the one surface of the case.

The size of the inner diameter of the first hole may be different from the size of the inner diameter of the second hole.

The case may include an accommodating body including an opening portion at the top; and an accommodating cover coupled to the accommodating body to close the opening portion, and the first hole and the second hole may be positioned on the accommodating cover.

The case may further include a body sealing portion positioned between the accommodating body and the accommodating cover.

The first hole and the second hole may each be provided in a plural number.

The plurality of first holes may be positioned in a first area adjacent to one edge in the one surface of the case, and the plurality of second holes may be positioned in a second area different from the first area in the one surface of the case.

The non-combustible gas may be one selected from the group including nitrogen, argon, helium, and carbon dioxide or a combination thereof.

The secondary battery assembly may further include a first hole formed on one side surface of the case; and a second hole formed on the other side surface of the case opposing the first hole.

In addition, the height of the first hole and the height of the second hole may be different based on the bottom surface of the case.

The secondary battery assembly may include a plurality of battery cells; and a case forming an accommodating space for accommodating the plurality of battery cells; and the pressure of the accommodating space may be maintained at a preset vacuum pressure lower than an air pressure outside the case.

The secondary battery assembly may include a plurality of battery cells; and a case forming an accommodating space for accommodating the plurality of battery cells; and an oxygen concentration in the accommodating space may be maintained below a preset allowable combustion concentration.

According to an embodiment of the present disclosure, the air inside of a secondary battery assembly can be discharged or the inside of a secondary battery assembly can be easily filled with a non-combustible gas.

According to another embodiment of the present disclosure, fire and explosion of a secondary battery assembly can be minimized or prevented.

According to still another embodiment of the present disclosure, the lifespan and stability of a secondary battery assembly can be improved.

These and other features and advantages will become better understood from the following drawings and detailed description of embodiments of the present disclosure.

### BRIEF DESCRIPTION OF THE DRAWINGS

FIG. 1 shows an exploded simplified schematic diagram of a secondary battery assembly according to an embodiment of the present disclosure.
FIG. 2 shows an accommodating body according to an embodiment of the present disclosure.
FIGS. 3A and 3B show a first hole and a second hole according to an embodiment of the present disclosure.
FIGS. 4A and 4B show variations of a first hole and a second hole according to embodiments of the present disclosure.
FIG. 5 shows another secondary battery assembly according to an embodiment of the present disclosure.
FIG. 6 shows still another secondary battery assembly according to an embodiment of the present disclosure.

### DETAILED DESCRIPTION

Hereinafter, various embodiments of the present disclosure will be described in detail with reference to the attached drawings. The configuration or control method of the apparatus described below is only for describing the embodiments of the present disclosure and is not intended to limit the scope of the present disclosure. The same reference numerals used throughout the specification indicate the same components.

Specific terms used in the present specification are merely for convenience of description and are not used to limit the illustrated embodiments.

As used in the present specification, singular expressions include plural expressions unless the context clearly dictates otherwise.

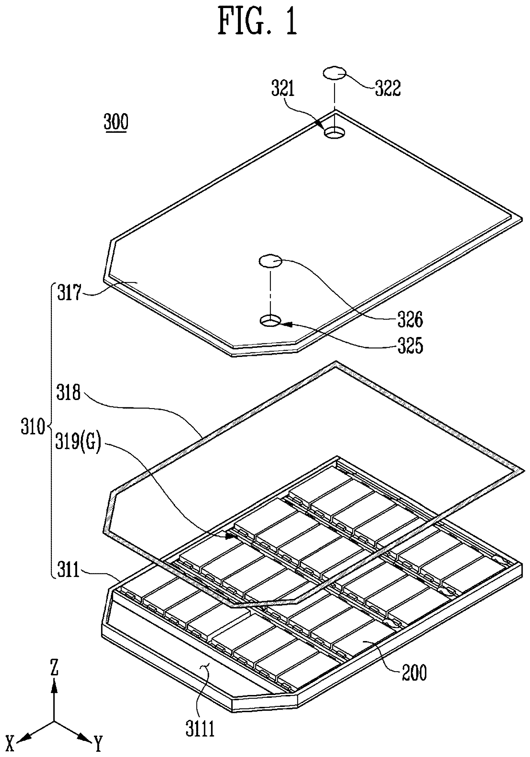

FIG. 1 shows an exploded simplified schematic diagram of a secondary battery assembly 300 according to an embodiment of the present disclosure.

A secondary battery assembly 300 according to an embodiment of the present disclosure is a general term for a battery module or battery pack. The battery module refers to a secondary battery assembly in which a plurality of battery cells are grouped together in a number of one or greater and placed in a case to protect them from external shock, heat, vibration, or the like. In addition, the battery pack refers to a secondary battery assembly accommodating a preset number of battery modules to achieve a finally desired voltage or power.

In addition, a secondary battery assembly 300 according to an embodiment of the present disclosure may refer to a battery of a cell-to-pack (CTP) structure that generates a desired voltage or power by accommodating a preset number of battery cells while omitting the battery module.

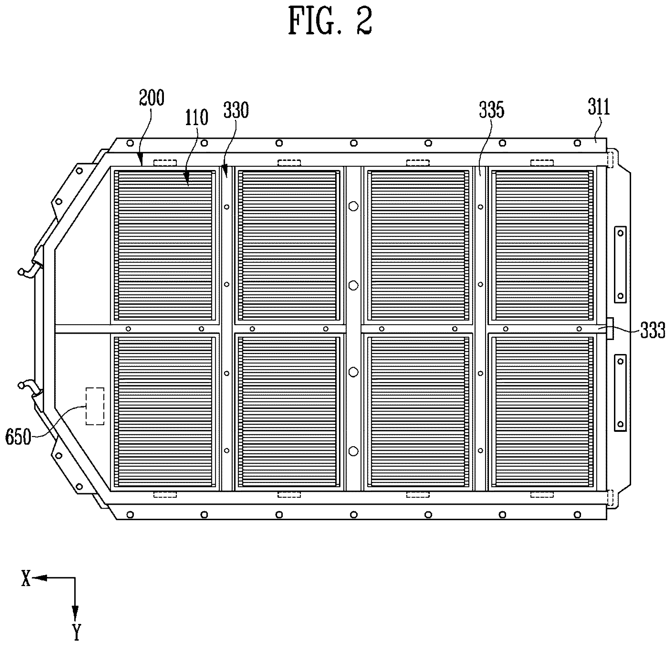

Referring to FIG. 1, a secondary battery assembly 300 according to an embodiment of the present disclosure may include a plurality of battery cells 110 (see FIG. 2) producing or storing electric energy and a case forming an accommodating space 319 for accommodating the plurality of battery cells 110.

Referring to FIG. 1, a plurality of battery cells 110 grouped together in a certain number are accommodated in a battery module 200, the battery module 200 may be accommodated in the case 310. Therefore, the secondary battery assembly 300 according to an embodiment of the present disclosure may include a battery module 200 including a plurality of battery cells 110 and a case 310 forming an accommodating space 319 accommodating the battery module 200.

A secondary battery assembly 300 according to an embodiment of the present disclosure may include a non-combustible gas G filled into the accommodating space 319 to prevent fire and explosion of a battery cell 110 or a battery module 200. Because the non-combustible gas G is generally colorless and transparent and a space filled with the non-combustible gas G is the accommodating space 319, so in FIG. 1, the accommodating space 319 and the non-combustible gas are indicated as pointing to a same position.

However, in some embodiments, the non-combustible gas G may be a colored or opaque gas. When the non-combustible gas G is colored or opaque, leakage from the case 310 may be visually confirmed.

In general, the non-combustible gas G refers to a gas that cannot combust itself nor has the property of combusting when it is together with other substances. So non-combustible gas refers to a gas that is unrelated to combustion.

For example, the non-combustible gas G may be an inert gas (or noble gas) such as water vapor (H₂O), nitrogen (N₂), carbon dioxide (CO₂), helium (He), and argon (AR). Other examples of the non-combustible gas G include chlorofluorocarbons (CFCs) such as Freon gas.

Considering the operating temperature of a secondary battery assembly 300 including battery cells 110 and environmental pollution, the non-combustible gas G may preferably be one selected from the group including nitrogen, argon, helium, and carbon dioxide or a combination of thereof.

In addition, the non-combustible gas G may include other colored gases as described above.

When the non-combustible gas G is filled into the accommodating space 319, the non-combustible gas may minimize the contact with oxygen by the plurality of battery cells 110 or the battery module 200, and thus it may perform a function of minimizing or suppressing fire and explosion of the plurality of battery cells 110 or the battery module 200.

To this end, the non-combustible gas G may be filled into the accommodating space 319 at a preset filling pressure.

Moreover, instead of filling the accommodating space 319 with the non-combustible gas G, a secondary battery assembly 300 according to another an embodiment of the present disclosure may maintain the pressure of the accommodating space 319 at a preset vacuum pressure lower than an air pressure outside the case 310.

To minimize or prevent explosion and fire of the plurality of battery cells 110 or the battery module 200 positioned in the accommodating space 319, contact with oxygen in the air must be delayed or blocked as much as possible. To this end, the accommodating space 319 may be filled with a non-combustible gas G at the filling pressure, or, alternatively, the inside of the accommodating space 319 may be maintained at the vacuum pressure.

That is, filling the accommodating space 319 with a non-combustible gas G or maintaining the accommodating space 319 in a state close to a vacuum is designed to lower the oxygen concentration in the accommodating space 319. This is because, when the oxygen concentration in the accommodating space 319 is maintained lower than a combustible oxygen concentration in the battery cells 110 or the battery module 200, fire and explosion of the battery cells 110 or the battery module 200 may be minimized.

The secondary battery assembly 300 according to an embodiment of the present disclosure may maintain the oxygen concentration in the accommodating space 319 below a preset allowable combustion concentration. The allowable combustion concentration may vary depending on the volume of the case 310, the number of battery cells 110, and the degree of progression of a thermal runaway.

The case 310 may include an accommodating body 311 including an opening 3111 at the top, and an accommodating cover 317 coupled to the accommodating body 311 adapted to close the opening portion 3111. The accommodating body 311 may accommodate the plurality of battery cells 110 or the battery module 200 through the opening portion 3111. The accommodating cover 317 may be coupled to the accommodating body 311 to close the opening portion 3111.

Even when the opening portion 3111 is closed, an empty space of the accommodating space 319 may be filled with air. Therefore, the air accommodated in the accommodating space 319 should be replaced with the non-combustible gas G. The empty space of the accommodating space 319 refers to a space that is generally filled with air after the plurality of battery cells 110 are accommodated in the accommodating space 319.

In contrast, the secondary battery assembly 300 according to an embodiment of the present disclosure may discharge the air accommodated in the accommodating space 319 and maintain the pressure of the accommodating space 319 below the vacuum pressure.

To this end, the secondary battery assembly 300 may include a first hole 321 and a second hole 325 penetrating the case 310 and communicating with the accommodating space 319. In addition, the secondary battery assembly 300 may include a first closing member 322 and a second closing member 326 that close the first hole 321 and the second hole 325.

The secondary battery assembly 300 may fill the accommodating space 319 with a non-combustible gas G or discharge the air in the accommodating space 319 through the first hole 321 and the second hole 325 to maintain the vacuum pressure.

In addition, the secondary battery assembly 300 may close the first hole 321 and the second hole 325 using the first closing member 322 and the second closing member 326 to block the inside of the accommodating space 319 from the outside.

In addition, the secondary battery assembly 300 may include a body sealing portion 318 positioned between the accommodating body 311 and the accommodating cover 317. The body sealing portion 318, the first closing member 322, and the second closing member 326 may minimize or prevent leakage of a gas accommodated in the accommodating space 319 to the outside or inflow of the air outside of the case to the inside of the accommodating space 319.

The first hole 321 and the second hole 325 may be formed on one surface of the case 310.The first hole 321 and the second hole 325 may be positioned on the same one surface of the case 310.

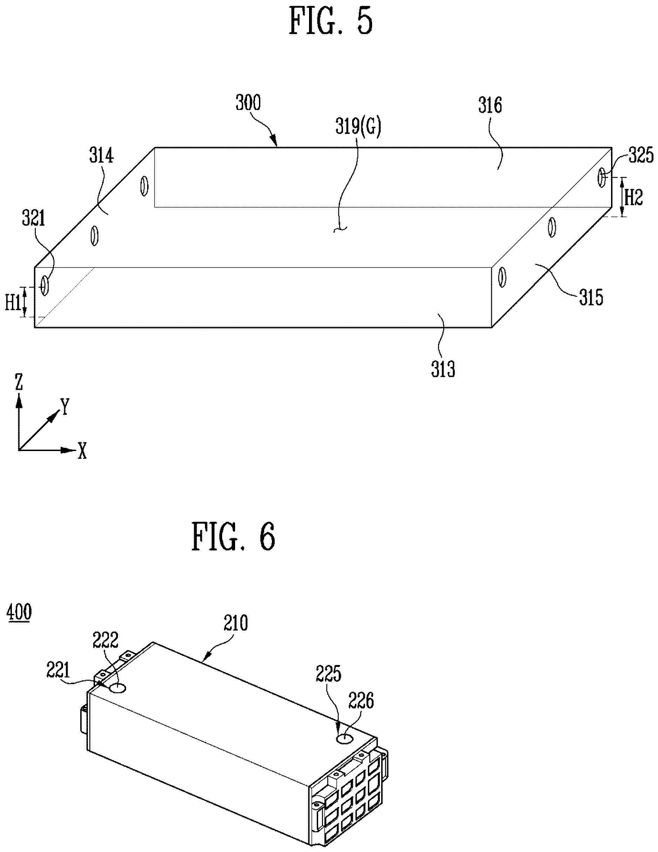

The one surface of the case 310 may refer to any surface of a bottom surface 313 (see FIG. 5) of the case supporting the plurality of battery cells 110, a side surface (not shown) of the case extending from any edge of the bottom surface 313 of the case towards the opening portion 3111 to form the accommodating space 319 together with the bottom surface 313 of the case, and a top surface of the accommodating space 319, or the accommodating cover 317.

Preferably, the first hole 321 and the second hole 325 may be formed to penetrate the top surface of the accommodating space 319 (not shown) or the accommodating cover 317. Therefore, the first closing member 322 and the second closing member 326 may be coupled to the top surface of the accommodating space 319 or the accommodating cover 317 to close the first hole 321 and the second hole 325.

For example, the first closing member 322 and the second closing member 326 may be coupled to the top surface of the accommodating space 319 or the accommodating cover 317 by welding. The accommodating cover 317 and the accommodating body 311 may also be coupled by welding.

FIG. 2 shows an accommodating body 311 according to an embodiment of the present disclosure. FIG. 2 illustrates an example in which the shape of the accommodating body 311 is asymmetrical along the X-direction. This is considering that the secondary battery assembly 300 is generally positioned at the bottom of an electric vehicle. However, in contrast, the accommodating body 311 and the accommodating cover 317 may have a symmetrical shape, for example, a rectangular shape.

The accommodating body 311 may accommodate the battery module 200 or the plurality of battery cells 110 therein. The accommodating body 311 may include a separating frame 330 for separating the battery module 200 or the plurality of battery cells 110 into sections. The separating frame 330 may separate the accommodating space 319 into a plurality of spaces. The battery module 200 or the plurality of battery cells 110 may be positioned separately in the plurality of spaces.

The separating frame 330 may serve to reinforce the strength of the accommodating body 311. The separating frame 330 may include a first frame 333 extending in the X-direction and a second frame 335 extending in the Y-direction positioned between the battery module 200 or the plurality of battery cells 110.

The secondary battery assembly 300 may further include a sensing portion 650 for measuring the pressure of a non-combustible gas G filled in the accommodating space 319. The sensing portion 650 may be configured to sense that the pressure of the accommodating space 319 falls below a preset sensing pressure. So, when the non-combustible gas G leaks from the secondary battery assembly 300, the sensing portion 650 may sense that the pressure of the accommodating space 319 falls below a preset sensing pressure.

In contrast, when an internal pressure of the accommodating space 319 is maintained at the vacuum pressure lower than an external pressure, the sensing portion 650 may sense that the pressure of the accommodating space 319 increases over the vacuum pressure.

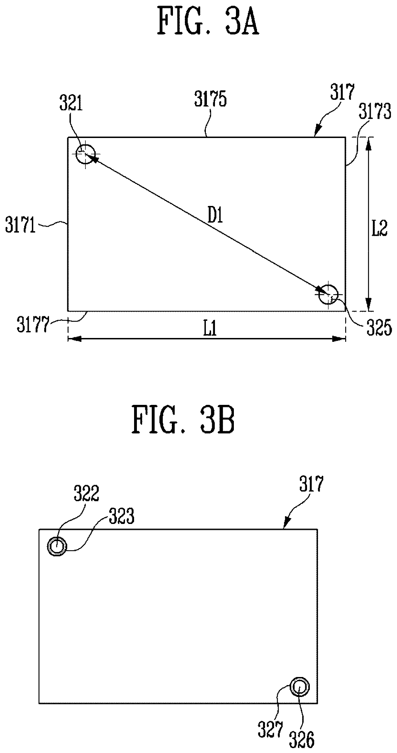

FIGS. 3A and 3B show a first hole 321 and a second hole 325 according to an embodiment of the present disclosure.

As described above, the secondary battery assembly 300 may fill the accommodating space 319 with a non-combustible gas G or discharge the air in the accommodating space 319 through the first hole 321 and the second hole 325 to maintain the vacuum pressure.

For example, referring to FIG. 3A, the non-combustible gas G may be injected into the accommodating space 319 through the first hole 321, and a gas remaining in the accommodating space 319 may be discharged through the second hole 325.

When the non-combustible gas G is injected through the first hole 321, the air inside the accommodating space 319 may be discharged through the second hole 325, and after a certain period of time, the non-combustible gas may also be discharged through the second hole 325.

In addition, the secondary battery assembly 300 may check whether the non-combustible gas G is filled into the accommodating space 319 up to a preset target amount through the second hole 325.

When it is sensed that the non-combustible gas G is discharged through the second hole 325, the secondary battery assembly 300 according to an embodiment of the present disclosure may discontinue injection of the non-combustible gas G and close the first and second holes 321 and 325 with the first and second closing members 322 and 326, respectively.

The inner diameter of the first hole 321 and the inner diameter of the second hole 325 may be different.

Since the first hole 321 allows the non-combustible gas G to flow in therethrough, while the second hole 325 should discharge a remaining gas in the accommodating space 319, to maintain the pressure in the accommodating space 319 above a certain level, the size of the first hole 321 may be larger than the size of the second hole 325.

Since the first hole 321 and the second hole 325 have different functions, the first hole 321 and the second hole 325 may be preferably positioned spaced apart from each other in a certain distance or longer.

Referring to FIG. 3A, the first hole 321 and the second hole 325 may be positioned diagonally on the accommodating cover 317. FIG. 3A illustrates the positions of the first hole 321 and the second hole 325 using the top surface of the accommodating space 319 or the accommodating cover 317, but the first hole 321 and the second hole 325 may be positioned anywhere on one side of the case 310.The diagonal arrangement of the first hole 321 and the second hole 325 allows the flowing-in non-combustible gas G to remain as much as possible when the non-combustible gas G pushes out the air in the accommodating space 319.

As illustrated in FIG. 3A, when the accommodating cover 317 is rectangular, any pair of edges 3175 and 3177 among two pairs of opposing edges among the four edges of the accommodating cover 317 will be longer than the other pair of edges 3171 and 3173. The other pair of edges 3171 and 3173 may be referred to as a pair of the relatively short edges, and the pair of edges 3175 and 3177 may be referred as the pair of relatively long edges.

At this time, the first hole 321 may be positioned closer to the edge 3171 than to the edge 3173. Likewise, the second hole 325 may be positioned closer to the edge 3173 than to the edge 3171.

Likewise, the first hole 321 may be positioned closer to the 3175 of the pair of long edges 3175 and 3177 than to the edge 3177. Likewise, the second hole 325 may be positioned closer to the edge 3177 than to the edge 3175.

Therefore, the first hole 321 and the second hole 325 may be positioned diagonally on the accommodating cover 317.

The distance D1 from the center of the first hole 321 to the center of the second hole 325 may be longer than the length (L1 or L2) of an edge of the accommodating cover 317 on the top surface of the accommodating space 319 or on the accommodating cover 317 or of an edge of the top surface of the accommodating space 319.

In some embodiments, an external device, also referred to herein as a discharge device, (not shown), may be used for discharging a gas through a second hole 325 and/or for confirming filling of the non-combustible gas G. Another external device, also referred to as an injector device, (not shown), may be used for injecting a non-combustible gas G through the first hole 321. The ejector and discharge devices may be connected to the first and second holes 321 and 325, respectively. Positioning the first and second holes 321 and 325 diagonally as farther apart from each other as possible may help to prevent one device from interfering with the other, and to clearly distinguish them.

Furthermore, the case 310 should be able to withstand a pressure of 6 bar or higher, which may be generated during a thermal runaway of the plurality of battery cells 110 accommodated therein.

To this end, referring to FIG. 3B, the secondary battery assembly 300 may include hole sealing portions 323 and 327 positioned between the first hole 321 and the first closing member 322 and between the second hole 325 and the second closing member to seal the first hole 321 and the second hole 325, respectively.

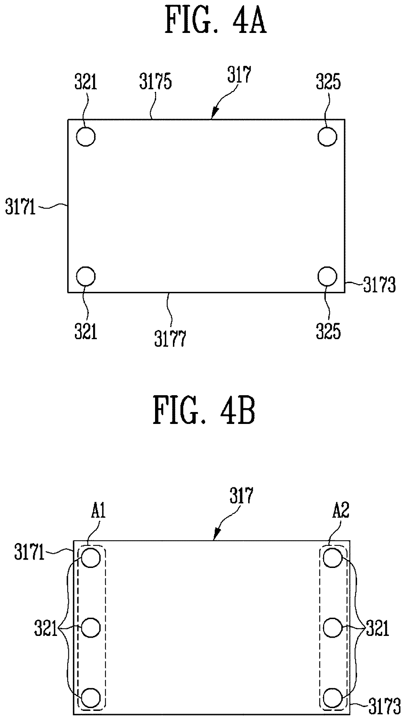

FIGS. 4A and 4B show variations of a first hole 321 and a second hole 325 according to embodiments of the present disclosure. As illustrated in FIGS. 4A and 4B, the first hole 321 and the second hole 325 may each be provided in a plural number.

The secondary battery assembly 300 may include a plurality of first holes 321 and a plurality of second holes 325 on the top surface of the accommodating space 319 or on the accommodating cover 317.

The number of first holes 321 and the number of second holes 325 may be the same. However, in contrast, when the non-combustible gas G may be injected through the plurality of first holes 321 and a gas remaining in the accommodating space 319 may be discharged and filling of the non-combustible gas G may be confirmed through the second hole 325, the number of the first holes 321 and the number of the second holes 325 may be different.

Referring to FIG. 4A, when the plurality of first holes 321 and the plurality of second holes 325 are each provided in two, the two first holes 321 and the two second holes 325 may be positioned adjacently to a corner where the pair of short edges 3171 and 3173 and the pair of long edges 3175 and 3177 meet.

Referring to FIG. 4A, the spacing between the plurality of first holes 321 may be smaller than the spacing between a first hole 321 among the plurality of first holes 321 and a second hole 325 among the plurality of second holes 325. Here, a spacing refers to the length from the center of one hole to the center of another hole.

Likewise, the spacing between the plurality of second holes 325 may be smaller than the spacing between a first hole 321 among the plurality of first holes 321 and a second hole 325 among the plurality of second holes 325.

To this end, referring to FIG. 4B, the plurality of first holes 321 may be positioned in a first area A1 adjacent to a first edge of the one surface of the case 310, and the plurality of second holes 325 may be positioned in a second area A2, which is different from the first area, and may be adjacent to an opposite edge the first edge of the case 310.

Preferably, the plurality of first holes 321 may be positioned in a first area A1 adjacent to one edge of the top surface of the accommodating space 319 or of the accommodating cover 317, and the plurality of second holes 325 may be positioned in second area A2, which is different from the first area, of the top surface of the accommodating space 319 or of the accommodating cover 317.

For example, the first area A1 may be positioned closer to edge 3171 of the pair of short edges 3171 and 3173, and the second area A2 may be positioned relatively closer to the other edge 3173.

FIG. 5 shows another secondary battery assembly 300 according to an embodiment of the present disclosure.

Referring to FIG. 5, the first hole 321 and the second hole 325 may be formed to penetrate a side surface of the accommodating space 319, that is, a side surface of the case 310.

The case 310 may include a bottom surface 313 of the case supporting the plurality of battery cells 110 and two opposing side surfaces 314 and 315 among side surfaces of the accommodating space 319 extending from any pair of opposing edges among four edges of the bottom surface 313 of the case.

The first hole 321 may be formed on the side surface 314 of the case among the two opposing side surfaces 314 and 315, and the second hole 325 may be formed on the opposing side surface 315 of the case. It is noted that the two opposing side surfaces 314 and 315 are only examples, and the first hole 321 and the second hole 325 may be formed on two side surfaces opposing in another direction.

In addition, the first hole 321 and the second hole 325 may be provided in a plural number.

The positions of the first hole 321 and the second hole 325 may be different based on the bottom surface 313 of the case. Since the molecular weight of the air in the accommodating space 319 is different from the molecular weight of the non-combustible gas G, in order to effectively discharge the air in the accommodating space 319 and fill the non-combustible gas G, the height H1 of the hole 321 and the height H2 of the second hole 325 may be different.

FIG. 6 shows still another secondary battery assembly 400 according to an embodiment of the present disclosure.

As described above, the secondary battery assembly 400 according to an embodiment of the present disclosure may be applied not only to a battery pack but also to a battery module 200. Referring to FIG. 6, the secondary battery assembly 400 may include a case 210 accommodating a plurality of battery cells (not shown), a first hole 221 and a second hole 225 formed to penetrate the case 210, and a first closing member 222 and a second closing member 226 coupled to the case 210 to close the first hole 221 and the second hole 225. The secondary battery assembly 400 may be injected with a non-combustible gas (not shown) and confirm filling of the non-combustible gas through the first hole 221 and the second hole 225.

Embodiments of the present disclosure may be modified and implemented in various forms, and its scope is not limited to the embodiments described above. Therefore, if a modified embodiment includes components of the present disclosure, it should be regarded as falling within the scope of the rights of the present disclosure. Furthermore, the embodiments may be combined to form additional embodiments.

## Claims

1. A secondary battery assembly comprising:
a plurality of battery cells;
a case forming an accommodating space for accommodating the plurality of battery cells; and
a non-combustible gas filled in the accommodating space.

2. The secondary battery assembly according to claim 1, further comprising:
a first hole and a second hole penetrating the case and communicating with the accommodating space; and
a first closing member and a second closing member coupled to the case to close the first hole and the second hole.

3. The secondary battery assembly according to claim 2, wherein, when the non-combustible gas is injected into the accommodating space through the first hole, at least a part of a gas in the accommodating space is discharged through the second hole.

4. The secondary battery assembly according to claim 2 or 3, wherein the first closing member and the second closing member each includes a hole sealing portion for sealing the first hole and the second hole.

5. The secondary battery assembly according to one of claims 2, 3 or 4, wherein the first hole and the second hole are formed on one surface of the case.

6. The secondary battery assembly according to claim 5, wherein the distance from the first hole to the second hole is longer than the length of an edge of the one surface of the case.

7. The secondary battery assembly according to claim 5 or 6, wherein the first hole and the second hole are positioned diagonally on the one surface of the case.

8. The secondary battery assembly according to one of claims 2 to 5, wherein a size of the inner diameter of the first hole is different from a size of the inner diameter of the second hole.

9. The secondary battery assembly according to one of claims 2 to 5 or 8, wherein the case includes an accommodating body including an opening portion at the top; and an accommodating cover coupled to the accommodating body to close the opening portion, and wherein the first hole and the second hole are positioned on the accommodating cover.

10. The secondary battery assembly according to claim 9, wherein the case further includes a body sealing portion positioned between the accommodating body and the accommodating cover.

11. The secondary battery assembly according to one of claims 2 to 5, 8 or 9, wherein the first hole and the second hole are each provided in a plural number.

12. The secondary battery assembly according to claim 11, wherein the plurality of first holes are positioned in a first area adjacent to one edge in the one surface of the case, and the plurality of second holes are positioned in a second area different from the first area in the one surface of the case.

13. The secondary battery assembly according to any one of the preceding claims, wherein the non-combustible gas is one selected from the group including nitrogen, argon, helium, and carbon dioxide or a combination thereof.

14. The secondary battery assembly according to any one of the preceding claims, further comprising:
a first hole formed on one side surface of the case; and
a second hole formed on the other side surface of the case opposing the first hole.

15. The secondary battery assembly according to claim 14, wherein a height of the first hole and a height of the second hole are different based on the bottom surface of the case.
